# EUROPEAN PATENT APPLICATION

(11) **EP 1 760 602 A1**
(43) Date of publication of application: **07.03.2007**
(21) Application number: 05767153.9
(22) Date of filing: 27.07.2005
(51) Int. Cl.: G06F 15/00, G06F 1/00, G06F 13/00

(54) **COMPUTER SYSTEM AND COMPUTER EQUIPPED WITH TERMINAL INFORMATION REPORTING FUNCTION**

(30) Priority: 28.07.2004 JP 2004219632
(71) Applicant: Orient Instrument Computer Co., Ltd, Osaka-shi, Osaka 536-0014 (JP)
(72) Inventor: ITO, Tomoaki, ORIENT INSTRUMENT COMPUTER CO., LTD, Osaka-shi, Osaka 536-0014 (JP)
(74) Representative: Paul, Dieter-Alfred
(86) International application number: PCT/JP2005/013730
(87) International publication number: WO 2006/011511

(57) **Abstract**

The invention aims to provide a computer system adapted to track the subsequent movement of a terminal or a data recording medium in the case that the terminal or the data recording medium is brought out without permission and simultaneously a terminal suitable for the computer system.

A computer system 1 having a terminal information reporting function, being formed by connecting a plurality of terminals 10 and a monitoring server 20 to the Internet, being adapted to transmit terminal information showing hardware requirements of the terminal 10 from the individual terminal 10 to the monitoring server 20, wherein the terminal 10 contains a transmission program 11 adapted to collect terminal information including a global IP address assigned to the terminal 10, so as to automatically transmit the terminal information to the monitoring server 20, the transmission program 11 being contained to be activatable in a state invisible during a normal operation of an operating system, and wherein the monitoring server 20 is adapted to sequentially record the terminal information transmitted from the terminal 10 with a date and time of initiating reception of the terminal information added to the terminal information.

## Description

### BACKGROUND OF THE INVENTION

### TECHNICAL FIELD

The present invention relates to a computer system having its own device information reporting function adapted to identify the location of a terminal (especially a computer with easy portability) or a data recording medium that is stolen (or brought out without permission) when the terminal or the data recording medium is stolen.

Further, the present invention simultaneously relates to a terminal (computer) for use in the computer system.

### BACKGROUND ART

Recently, computers become widely used not only in companies but also at home. These computers are often used with Internet access in various forms.

Companies, for example, use a server and a number of terminals (client devices) to build a LAN, through which a connection between individual terminals, an access to a server, or a connection to the Internet is carried out. At home, one computer may be directly connected to the Internet or a plurality of computers are combined to make up a LAN, through which individual computers may be connected to the Internet.

Along with a highly-integrated circuit, terminals (personal computers) of a high-performance and small dimensions, such as a laptop type or a note type also become widely used and these small computers require less installation space and are more conveniently carried than terminals (computers) of a stationary type. However, as small computers are conveniently carried, they are prone to theft. When computers are stolen (or brought out without permission), data in the computers may be leaked in addition to stealage of the computers themselves, and further the leaked data may be abused.

Thus, an antitheft system as shown in a patent document 1 is provided for preventing theft of terminal devices. The system disclosed in the patent document 1 is mainly directed to a mobile terminal (laptop computer) and detects the condition in which an AC adapter is pulled off and the terminal is not connected to a network so as to discourage theft. Thereby, theft is discouraged, while misinformation in the case in which the AC adapter is accidentally pulled off is eliminated.
Patent document 1: JP 2000-259274A

### DISCLOSURE OF THE INVENTION

### PROBLEMS TO BE SOLVED BY THE INVENTION

Although the antitheft system disclosed in the patent document 1 is effective in preventing theft by informing of theft, it may be impossible to prevent theft in the case in which a main power supply is shut off or in the absence of a user, and thus complete antitheft may not be performed.

The system disclosed in the patent document 1 is left vulnerable to an unwanted situation in which data in a terminal is copied into a data recording medium without permission, which medium is brought out. Therefore, once being brought out, the data is leaked, and further the data may be abused. Nothing can be done about that other than reporting a theft to the police.

An object of the present invention proposed in view of the problems and drawbacks described above is therefore to provide a computer system having an information reporting function adapted to identify the subsequent location of a terminal (computer) or a data recording medium in which data copied without permission is recorded, which is brought out. Further, another object of the present invention is to provide a computer provided with the information reporting function for use in the computer system.

### SUMMARY OF THE INVENTION

Thus, in order to achieve the objects described above, the present inventors have taken technical measures described below.

Herein, in the description below, a global IP address denotes an IP (Internet protocol) address assigned so as to identify a computer directly connected to the Internet. The global IP address is assigned by an Internet administration or an Internet service provider (hereinafter referred to as a provider).

A private IP address denotes an IP address assigned to each computer within an in-house communication network (LAN) from a predetermined IP address group.

A MAC (Media Access Control) address denotes a unique IP address assigned to a NIC (Network Interface Card such as a LAN card) installed in each computer within a LAN.

A "terminal" generally denotes an input device without a CPU using a large general-purpose computer in the TSS (time sharing system), but nowadays, a small and high performance personal computer has been developed and provided inexpensively.

Therefore, the former "terminal" is now replaced by a small personal computer, and becomes increasingly downsized. It has become common to carry out arithmetic processing by means of individual small computer installing a CPU instead of a large general-purpose computer.

Thus, in the present specification, a client computer (client device) attached to a LAN for use is referred to as a "terminal."

One of aspects of the invention is a computer system having a terminal information reporting function, being formed by connecting at least one terminal and a monitoring server to the Internet, being adapted to transmit terminal information showing hardware requirements of the terminal from the individual terminal to the monitoring server, wherein the terminal contains a transmission program adapted to collect terminal information including a global IP address assigned to the terminal, so as to automatically transmit the terminal information to the monitoring server, the transmission program being contained to be activatable in a state invisible during a normal operation of an operating system, and wherein the monitoring server is adapted to sequentially record the terminal information transmitted from the terminal with no addition or with at least a date and time of initiating reception of the terminal information added to the terminal information.

According to the present aspect, the terminal (client device) connected to a LAN transmits to the monitoring server terminal information including a global IP address assigned to the LAN.

In the case that any terminal is stolen and connected to the Internet at another location different from the LAN, terminal information including a global IP address assigned to the other connecting location is transmitted to the monitoring server. Therefore, the terminal information including the other global IP address different from that assigned to the LAN is recorded in the monitoring server.

That reveals the terminal information including the global IP address assigned to the location where the terminal brought out is connected, thereby ensuring identification of the whereabouts of the terminal brought out.

Such a configuration that the monitoring server records the terminal information with a date and time of initiating reception added to the terminal information yields the terminal information including the global IP address different from that assigned to the LAN and the date and time of initiating reception, in referring to logs in the monitoring server by an administrator.

A provider that manages the location where the terminal brought out is connected possesses transmission records (logs) to the monitoring server from the terminal brought out. In other words, the provider possesses the logs in which data such as the global IP address assigned to the terminal brought out, the global IP address assigned to a destination, and a date and time of transmission and routing data to the connecting location of the terminal brought out are recorded on transmission as being related to each other.

Consequently, a theft report is filed to the police herewith accompanied by the data including the date and time of initiating reception and the terminal information including the above-mentioned global IP addresses, those extracted from the logs in the monitoring server, thereby making it possible for the police authority to identify the connecting location of the terminal brought out in referring to the logs of the provider.

In the present aspect, it is possible to take the following measures as a way to contain the transmission program in the terminal to be in a state invisible during a normal operation of an operating system (hereinafter referred to as an OS).

In the case of using Windows (registered trademark of Microsoft Corporation) as an OS for the terminal, for example, a power-on operation of the terminal (personal computer) executes a number of programs, which includes the transmission program set as one of them. Then, such a program as intentionally hiding the transmission program even with a display of a list of the set programs is set.

Thereby, the transmission program always remain in memory upon a power-on operation of the terminal, and further, it is possible to hide the transmission program from an operator (a person who has brought out the terminal).

Another aspect of the invention provides a computer system having a terminal information reporting function, being formed by a LAN connected to the Internet and incorporating at least one terminal (computer) and a monitoring server, being adapted to transmit terminal information showing hardware requirements of the terminal from the individual terminal to the monitoring server, wherein the terminal contains a transmission program adapted to collect terminal information including a global IP address and a private IP address assigned to the terminal, so as to automatically transmit the terminal information to the monitoring server, the transmission program being contained to be activatable in a state invisible during a normal operation of an operating system, and wherein the monitoring server is adapted to sequentially record the terminal information transmitted from the terminal with no addition or with at least a date and time of initiating reception of the terminal information added to the terminal information.

In the computer system having a terminal information reporting function with the above-mentioned configurations, the transmission program may be activated upon at least one selected from a power-on operation of the terminal and an Internet connection of the terminal.

According to the present aspect, the transmission program is activated when the terminal is powered on or connected to the Internet, so as to transmit terminal information to the monitoring server with certainty.

Further, the present aspect utilizes a power-on timing or an Internet connection timing as a start on activation of the transmission program. Thus, setting for activating the transmission program is arranged simpler than, for example, arrangement for activating the transmission program at predetermined time intervals, ensuring that load on a CPU is reduced.

In the computer system having a terminal information reporting function with the above-mentioned configurations, the terminal may have a recording mode adapted to automatically record the transmission program besides data in the terminal on recording the data in a data recording medium.

Herein, the data denotes all data such as program data constituting software or unique data produced by means of applications.

In the present aspect embodied, if and when a third party records (copies) without permission data in the terminal into a data recording medium, the transmission program is simultaneously recorded in the data recording medium by selection of the recording mode in advance.

Consequently, if and when the data recording medium is brought outside to be mounted on another terminal (computer), the data itself is read out. However, execution of the transmission program recorded in the data recording medium by the third party that has brought out the data transmits the terminal information to the monitoring server, thereby readily identifying the terminal (computer) on which the data recording medium brought out is mounted.

In short, according to the present aspect, even if data in a terminal is copied into a data recording medium and brought out, the executed transmission program identifies the whereabouts of the computer intending to access to the data recording medium brought out.

It may be that a computer on which a data recording medium brought out is mounted is not connected to the Internet. In this case, even though the transmission program is activated, terminal information is not transmitted to the monitoring server.

However, if the transmission program always remains in system memory in an invisible state to an operator, the terminal information is transmitted to the monitoring server once the computer is connected to the Internet.

In the computer system having a terminal information reporting function with the above-mentioned configuration, the terminal may be adapted to record the transmission program in the data recording medium so as to be automatically activatable in a state invisible during a normal operation of the operating system.

This aspect hides the transmission program contained in the data recording medium from a third party that has brought out data, thereby preventing release of residence of the transmission program in the system memory. Further, since the transmission program is contained in a data recording medium so as to be automatically activated, when the data recording medium is mounted on another computer, the transmission program is automatically activated to immediately transmit information of the computer to the monitoring server. Consequently, the location where the brought-out data is used is readily identified.

In the computer system having a terminal information reporting function with the above-mentioned configurations, the terminal may have a recording mode adapted to convert data in the terminal to a recoverable executable file, to embed the transmission program within the converted executable file, and to record the file in the recording medium, so as to record the data in the data recording medium, so that the data is recovered and the transmission program is activated upon execution of the executable file recorded in the data recording medium by the recording mode.

At this time, the recovered data is saved on a rewritable recording medium such as a hard disk drive provided in the terminal. The transmission program always remains in system memory.

According to the present aspect, when data in the terminal is recorded in a data recording medium, only the executable file in which the transmission program is embedded is recorded in the data recording medium and the transmission program is hidden by selection of the recording mode in advance.

Consequently, it appears as if only the executable file might exist on the data recording medium for a third party that has brought out the data recording medium. That highly possibly induces the third party to execute the executable file. When the executable file is executed, the data is recovered to be read out, but simultaneously, the transmission program is activated and always remains in system memory. Then, the transmission program transmits information of the computer that intends to read out the data to the monitoring server, thereby readily identifying the location where the brought-out data is read out.

In short, the present aspect readily identifies the whereabouts of a data recording medium in which data is recorded even if only the data recording medium is brought out.

In the computer system having a terminal information reporting function with the above-mentioned configurations, the terminal may have another recording mode adapted to execute, on converting the data to the executable file, processing of encryption or compression in at least one step selected from the first step and the second step besides the first step, so that the data is recovered to a state selected from a decrypted state and a decompressed state in the immediately previous step upon execution of the executable file produced by the recording mode.

In the recording mode of processing only the first step in the present aspect, data is encrypted or compressed, the transmission program is embedded in an executable file formed as a consequence of the encryption or compression of the data, and then the file is saved in a data recording medium. When a third party that has brought out the data recording medium mounts the medium on a computer at a different location to execute the executable file, the data is decrypted or decompressed and becomes readable. However, at the same time, the transmission program is activated to transmit information of this computer to the monitoring server, thereby identifying the whereabouts of the computer intending to access to the brought-out data.

Further, in the recording mode of processing the first and second steps in the present aspect, an executable file is formed in the data recording medium as a consequence of the second encryption or compression of the data having encrypted or compressed in the first step. The transmission program is embedded in the execution file and recorded in the data recording medium as being contained in the executable file.

Consequently, when a third party that has brought out the data recording medium mounts the data recording medium on a computer at a different location to execute the executable file, the data is recovered to a decrypted or decompressed state in the first step, so that its original data is not seen at this stage. Further, the transmission program is activated at the - same time to transmit information of the computer to the monitoring server, thereby identifying the location where the brought-out data is used.

In short, just if the terminal is set in the recording mode of processing the first and second steps, the original data is not read out by a third party even if the data is recorded in a data recording medium and brought out. In addition, the location where the brought-out data is used is identified.

In the computer system having a terminal information reporting function with the above-mentioned configurations, the terminal may be adapted to save at least one collection of the collected terminal information, and the terminal may be adapted to transmit to the monitoring server, on activation of the transmission program, the latest terminal information newly collected and the previous terminal information collected and saved before.

In the present aspect, the transmission program transmits the collected latest terminal information and the saved terminal information collected before to the monitoring server.

Consequently, in the present aspect embodied, if and when a data recording medium is brought out, the transmission program collects information of a computer of a third party that has brought out the medium and simultaneously transmits to the monitoring server the computer information collected at this time and the saved previous information of the terminal brought out.

Thereby, even if a plurality of data recording media are brought out, it is possible to readily determine by which terminal the data recording media brought out are recorded and to identify the location where the brought-out data is used as well, in referring to log data recorded in the monitoring server.

In the present aspect, it is also possible to have such a configuration as using the previously collected terminal information saved in a data recording medium or a hard disk drive mounted on a terminal (computer) in addition to the transmission program to activate the transmission program in the case that the terminal or the data recording medium is brought out.

In other words, it is also possible to have such a configuration, in the case that a terminal or a data recording medium is brought out, by determining disagreement between a global IP address assigned to the location where the terminal is newly connected and a global IP address included in the proper terminal information to activate the transmission program.

In the computer system having a terminal information reporting function described above, the terminal may be adapted to record, on recording data in the terminal into a data recording medium, the latest terminal information collected on recording and the transmission program in the data recording medium.

In the present aspect embodied, the latest terminal information collected on recording of data in a data recording medium is recorded in the data recording medium with the data. Then, the terminal information collected before including a name of an application producing the data recorded in the data recording medium and brought out or a file name of the data is transmitted to the monitoring server. That readily identifies which terminal is used for recording the brought-out data in the data recording medium.

In the computer system having a terminal information reporting function described above, the terminal information may include at least one selected from a group of a private IP address assigned to the terminal, a MAC address unique to the terminal, a name of the terminal, a user name of the terminal, a name of an operating system installed in the terminal, a name of a used application and a file name in addition to the global IP address.

Even when the terminal information has only a global IP address, as described in the above-mentioned configurations, the whereabouts of the terminal brought out is identified in combination with a date and time of initiating reception recorded in the monitoring server. Similarly, even when the terminal information has only a global IP address, the whereabouts of a computer intending to access to a data recording medium brought out is identified.

According to the present aspect, the terminal information includes at least one of the above-mentioned data in addition to the global IP address, and the transmission program collects these data and transmits them to the monitoring server.

Consequently, in the aspect embodied, in the case that a terminal is brought out, it is possible to readily identify the location where the terminal brought out is originally mounted or the original user in referring to the terminal information recorded in the monitoring server. Further, in the case that a plurality of terminals are brought out without permission, it is also possible to determine which terminal brought out has transmitted the data in referring to the transmitted terminal information.

On the other hand, in the case that a data recording medium is brought out, information unique to a computer used by a person who brought out the medium is recorded in the monitoring server, thereby ensuring identification of the computer of the person and the location where the computer is located. Especially, addition of a MAC address to the computer information identifies a NIC (Network Interface Card) mounted on the computer. Further, addition of a user name to the computer information, in the case that the user name is registered in the computer information of the person, tells its name.

Still further, addition of other information to the terminal information provides much more clues so as to identify the location where the terminal or data that has been brought out is used.

The computer system having a terminal information reporting function described above may further include a business-oriented server connected to the Internet instead of the monitoring server, so that the business-oriented server is equipped with a function of the monitoring server.

In the present aspect embodied, the business-oriented server is equipped with the function of the monitoring server, thereby reducing the number of installation of servers requiring enhanced performance. That builds up a computer system having a computer information reporting function with a view to cost saving.

Still another aspect of the present invention is a terminal having a terminal information reporting function being connectable to the Internet, containing a transmission program adapted to collect a terminal information including a global IP address assigned to the terminal to automatically transmit the information to a destination possessing a predetermined IP address, wherein the transmission program is contained to be activatable in a state invisible during a normal operation of an operating system.

The above-mentioned terminal is adapted to activate the transmission program upon at least one selected from a power-on operation of the computer and an Internet connection of the computer.

The above-mentioned terminal may further contain a recording mode adapted to automatically record the transmission program besides data in its own device on recording the data in a data recording medium.

The above-mentioned terminal may be adapted to record the transmission program in the data recording medium so as to be automatically - activatable in a state invisible during a normal operation of the operating system.

The above-mentioned terminal may have a recording mode adapted to convert data in its own device to an executable file, to embed the transmission program within the converted executable file, and to record the file in the recording medium, so as to record the data in the data recording medium, so that the data is recovered with the transmission program being activated upon execution of the executable file recorded in the data recording medium by the recording mode.

The above-mentioned terminal may have another recording mode adapted to execute, on converting the data to the executable file, processing of encryption or compression in at least one step selected from the first step and the second step besides the first step, so that the data is recovered to a state selected from a decrypted state and a decompressed state in the immediately previous step upon execution of the executable file produced by the recording mode.

The above-mentioned terminal may be adapted to save at least one collection of the collected terminal information and to transmit to the destination, on activation of the transmission program, the latest terminal information newly collected and the previous terminal information collected and saved before.

The above-mentioned terminal may be adapted to record, on recording data in its own device into a data recording medium, the latest terminal information collected on recording and the transmission program in the data recording medium.

In the above-mentioned terminal, the terminal information may contain at least one selected from a group of a private IP address assigned to the terminal, a MAC address unique to the terminal, a name of the terminal, a user name of the computer, a name of an operating system installed in the terminal, a name of a used application and a file name in addition to the global IP address.

### ADVANTAGEOUS EFFECT OF THE INVENTION

According to the aspect as defined in one of claims 1 to 3, even if a terminal is brought out without permission, the location where the terminal is subsequently used is readily identified. That protects data from leaking out of the terminal and being abused.

According to the aspects as defined in claims 4 and 5, even if data in a terminal is recorded in a data recording medium and brought out without permission, the location where the data recording medium is subsequently used is readily identified. That protects the leaked data from being abused.

According to the aspects as defined in claims 6 and 7, even if a data recording medium in which data in a terminal is recorded is brought out, the location where the data recording medium is subsequently used is readily identified. That protects the leaked data from being abused.

The aspects as defined in claims 8 to 10 each yield information enough to identify what is brought out and who has brought out in referring to terminal information.

The aspect as defined in claim 11 provides a computer system having a computer information reporting function with a view to cost saving.

The aspects as defined in claims 12 to 20 each provide a computer having a computer information reporting function suitable for use in the systems as defined in claims 1 to 11.

### BRIEF DESCRIPTION OF THE DRAWINGS

Fig. 1 is a schematic diagram showing a computer system having a terminal information reporting function relating to an embodiment of the present invention;
Fig. 2 is a schematic diagram showing terminal information collected and saved by a transmission program of a terminal;
Figs. 3A and 3B are schematic diagrams each showing data recorded in a monitoring server;
Fig. 4 is a schematic diagram showing a state in which a terminal employed in the computer system in Fig. 1 is connected to the Internet in a different location;
Fig. 5 is a schematic diagram showing a recording mode of a terminal employed in the computer system in Fig. 1;
Fig. 6 is a schematic diagram showing a state in which a data recording medium in which data is recorded by a terminal employed in the computer system in Fig. 1 is mounted in a terminal in a different location;
Fig. 7 is a schematic diagram showing terminal information collected and saved by a transmission program of a data recording medium; and
Fig. 8 is a schematic diagram showing data recorded in a monitoring server.

### DESCRIPTION OF THE PREFERRED EMBODIMENTS

Now, a preferred embodiment of the present invention will be described below, making reference to the accompanying drawings.

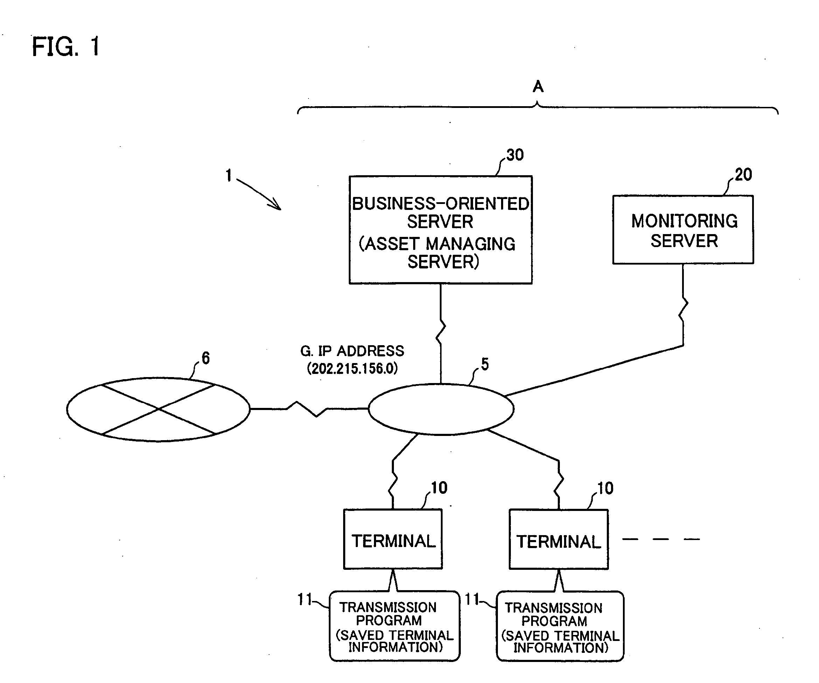

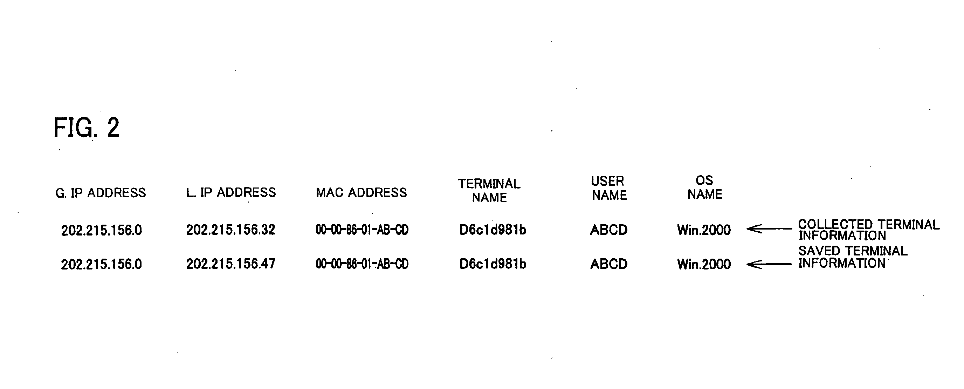

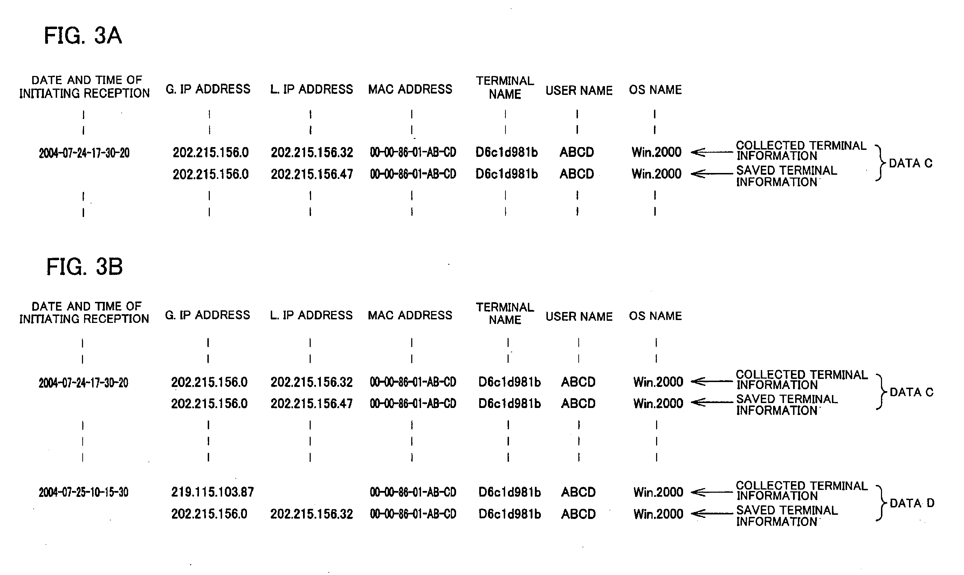

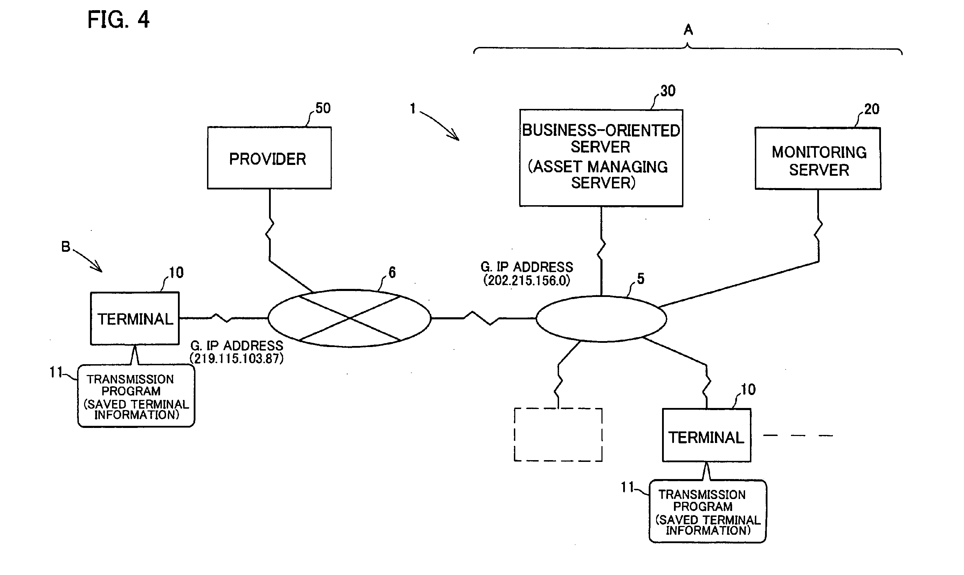

Fig. 1 is a schematic diagram showing a computer system 1 having a terminal information reporting function relating to an embodiment of the present invention. Fig. 2 is a schematic diagram showing terminal information collected and saved by a transmission program of a terminal. Figs. 3A and 3B are schematic diagrams each showing data recorded in a monitoring server. Fig. 4 is a schematic diagram showing a state in which a terminal in Fig. 1 is connected to the Internet in a different location.

Referring to Fig. 1, the computer system 1 in the present embodiment is disposed within a LAN (Local Area Network) 5 established in a specific organization A. The LAN 5 is connected with a plurality of terminals 10, 10 ···, a monitoring server 20, and a business-oriented server 30. Each terminal 10 and the servers 20 and 30 are connectable to the Internet 6 via the LAN 5.

The terminal 10 is a personal computer based on Windows operating system (OS) and has a hard disk drive saving a transmission program 11 described in detail below.

The transmission program 11 is activated when the terminal 10 is powered on or when the terminal 10 is connected to the Internet and collects terminal information including a global IP address assigned to the terminal 10 (LAN 5) in Internet connection to transmit the terminal information to the monitoring server 20, the program 10 being contained to be activatable in a state invisible during a normal operation of the OS.

Specifically, the transmission program 11 is set as one of start programs of the Windows, and further has a setting in a program so as to intentionally prevent the display of the transmission program 11 even when a list of the set start programs is displayed.

Thereby, the transmission program 11 is resident in system memory upon a power-on operation of the terminal 10, and it is possible to hide existence of the transmission program 11 to an operator of the terminal 10 as well.

The transmission program 11 is activated when the terminal 10 is powered on and has functions of collecting current terminal information shown in Fig. 2 and sending the collected latest terminal information (collected terminal information) and the previous terminal information collected and saved before in the terminal 10 (saved terminal information) to the monitoring server 20.

Specifically, when being activated, the transmission program 11 collects the current (latest) terminal information and transmits the collected current terminal information and the saved previous information to the monitoring server 20. Then, the saved previous terminal information is overwritten with the collected terminal information as needed. It is possible to constantly save a plurality of versions (five versions, for example) of collected terminal information by, for example, saving first five versions of collected terminal information, then overwriting the first version of collected terminal information with the sixth version, and so on, so that the latest versions (five versions in this case) of collected terminal information can remain.

Referring to Fig. 2, the transmission program 11 collects six kinds of own device data as terminal information. Specifically, the own device data consists of a global IP address and a private IP address assigned to the terminal 10 (LAN 5), a MAC address unique to an NIC (LAN card) installed in the terminal 10, a name of the terminal 10, a user name registered in the terminal 10, a name of an OS installed in the terminal 10.

In the present embodiment, as described below, names of an application and a file used in the terminal 10 are collected as the own device data in addition to the six kinds of data described above, though omitted in Fig. 2.

Referring to Fig. 3A, the monitoring server 20 has a function of sequentially storing terminal information transmitted from a plurality of terminals 10 with a date and time of initiating reception added to the terminal information (see data C in Fig. 3A).

On the other hand, the business-oriented server 30 is an asset managing server for managing assets used in the organization, for example, and is accessible from a plurality of terminals 10.

Next, making reference to Figs. 1, 2, 3A, and 3B, an operation when the terminal 10 is powered on will be described.

A global IP address, a private IP address, and a MAC address used in the following description are tentative addresses for convenience of explanation and have no relation to the respective addresses assigned to the terminal 10 when the terminal 10 is actually connected to the Internet.

Referring to Fig. 1, a power-on operation of the terminal 10 activates the OS and connects the terminal 10 to the Internet 6 via the LAN 5. The transmission program 11 is activated in conjunction with the connection of the terminal 10 to the Internet 6.

Upon activation of the transmission program 11, terminal information (own device information) shown in Fig. 2 is collected by a program processing. A global IP address (202.215.156.0) of the terminal information collected at this time is assigned to the LAN 5 in the organization A.

The transmission program 11, as shown in Fig. 2, transmits the collected terminal information and the saved terminal information previously collected to the monitoring server 20 via the LAN 5.

Herein, the present embodiment employs such a configuration as fixedly assigning the global IP address (202.215.156.0) to the LAN 5 in the organization A and dynamically assigning a private IP address to a plurality of terminals 10 with a dedicated server (not shown) located in the LAN 5.

Consequently, comparison of the collected terminal information with the saved terminal information previously collected reveals, as shown in Fig. 2, that only their private IP addresses are different from each other and that the other data are all the same.

The private IP address assigned by the dedicated server on the previous power-on operation of the terminal 10 is (202.215.156.47), whereas the private IP address assigned on this time's power-on operation is (202.215.156.32).

On the other hand, the monitoring server 20 having received the terminal information transmitted from the terminal 10, as shown in the data C in Fig. 3A, stores together the received terminal information and a date and time of initiating reception as being related to each other in a storage device not shown. The date and time of initiating reception is stored by being separated to Christian year, month, date, hour, minute, and second.

In this way, in the computer system 1 shown in Fig. 1, upon a power-on operation of any terminal 10, terminal information of this terminal 10 is automatically transmitted to the monitoring server 20 to be recorded according to the above-mentioned procedure by the transmission program 11 contained in this terminal 10.

After this, normal works using the terminal 10 are performed. They include a work using an application contained in the terminal 10, a work by access to the business-oriented server 30, or a liaison work between the other terminals 10.

Consequently, as long as the terminal 10 is connected to the LAN 5 in the organization A, upon each power-on operation of the terminal 10, - terminal information different from the previous information only in a date and time of initiating reception and a private IP address is recorded in the monitoring server 20.

However, if and when a terminal 10 connected to the LAN 5 is stolen and the stolen terminal 10 is connected to the Internet 6 in another location different from the organization A, changes come out with terminal information recorded in the monitoring server 20. Fig. 4 shows a state in which the terminal 10 connected to the LAN 5 is stolen and installed in another connecting location B.

When the stolen terminal 10 is installed in the connecting location B and connected to the Internet 6, the transmission program 11 contained in the stolen terminal 10 is activated according to the above-mentioned procedure.

Herein, in Fig. 4, it is supposed that the connecting location B is a personal residence and that a global IP address is dynamically assigned by a provider 50 managing the connecting location B upon each connection to the Internet 6.

The transmission program 11 is activated to collect a global IP address (219.115.103.87) assigned by the provider 50, the MAC address of the stolen terminal 10, a name of the terminal 10, a user name, and an OS name as terminal information. Then, the collected latest terminal information and the previously collected terminal information are transmitted to the monitoring server 20 as the terminal information.

In this case, as the transmission program 11 always remains in system memory in a state invisible during a normal operation of the OS, existence of the transmission program 11 is hidden against an operator (referring person) of the stolen terminal 10.

The monitoring server 20 having received the terminal information transmitted from the connecting location B, as shown in data D in Fig. 3B, records together the received terminal information and a date and time of initiating reception as being related to each other.

As described above, since the stolen terminal 10 is moved from the LAN 5 in the organization A to the connecting location B, the global IP address assigned to the terminal 10 has changed from the global IP address (202.215.156.0) assigned in the organization A to the global IP address (219.115.103.87) assigned to the connecting location B.

Consequently, referring to the collected latest terminal information of the terminal information (data D) recorded in the monitoring server 20 shown in Fig. 3B, the global IP address (219.115.103.87) assigned to the connecting location B is identified. Further, referring to the saved terminal information previously collected, the global IP address (202.215.156.0) previously assigned is identified, whereby it is revealed that the previous connecting location is the LAN 5 in the organization A.

Still further, referring to the MAC address, the name of the terminal, the user name, and the OS name in the terminal information, the terminal 10 having transmitted its terminal information is identified as the terminal 10 stolen from the organization A.

On the other hand, when the terminal information is transmitted from the stolen terminal 10 to the monitoring server 20, a transmission record (log) remains in the provider 50 managing the connecting location B.

Specifically, data in which data including at least the global IP address (219.115.103.87) assigned to the stolen terminal 10, the time and date of initiating reception (2004-07-25-10-15-30), and an IP address of a destination are made related to a routing datum showing a route to the connecting location B is recorded in the provider 50.

Consequently, the data D in which the global IP address in the present terminal information is different from that in the previous one is extracted from the terminal information in Fig. 3B, so that a damage report is filed to the police herewith accompanied by the date and time of initiating reception (2004-07-25-10-15-30). That makes it possible for the police authority to identify the connecting location B (where the terminal 10 is used) in referring to the logs of the provider 50.

In this way, in the case that a terminal 10 is brought out without permission from a LAN 5 having a monitoring server 20 and a plurality of terminals 10 each containing a transmission program 11, the computer system 1 in the present embodiment tracks the subsequent movement of the terminal 10, once the terminal 10 is connected to the Internet 6.

That identifies the location where the terminal 10 is installed and protects secret data in the terminal 10 from being abused as well.

The present embodiment illustrates the case of the connecting location B of the stolen terminal 10 being a personal residence, but it is possible to identify the connecting location B in a similar procedure even in the case of the connecting location being an organization such as a company.

Next, an operation of the computer system 1 in the present embodiment not in the case that the terminal 10 itself is brought out, but in the case that data such as secret data in the terminal 10 is brought out by being recorded in a data recording medium without permission, or in the case that a data recording medium in which data in the terminal 10 is recorded is brought out without permission will be described in detail.

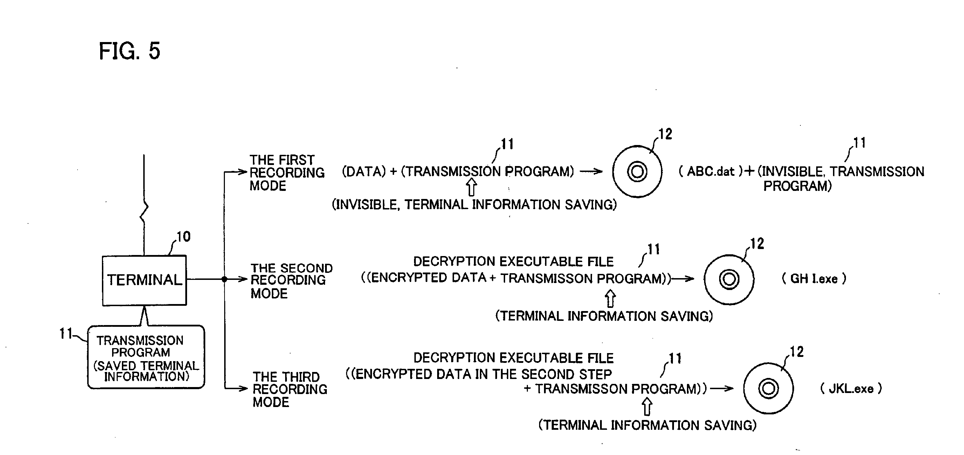

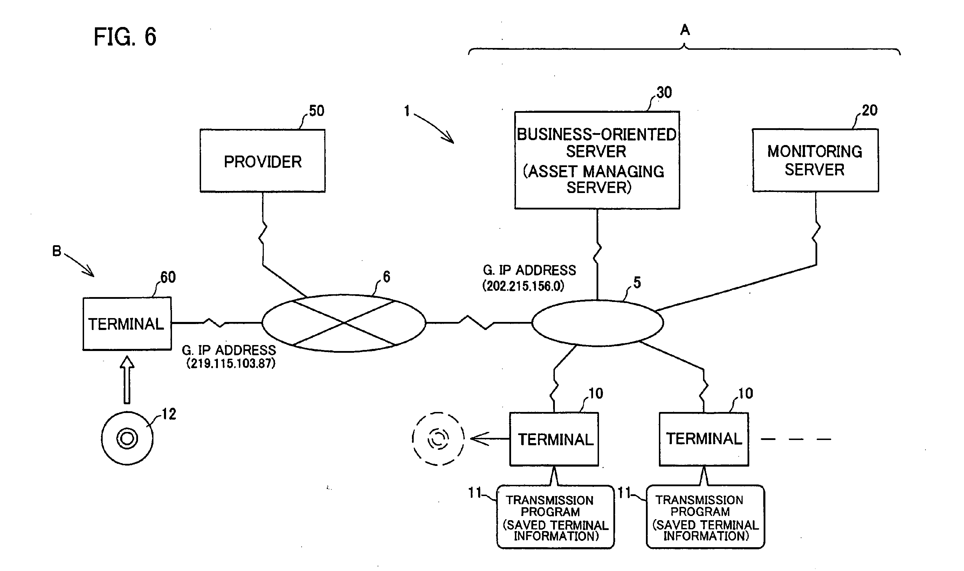

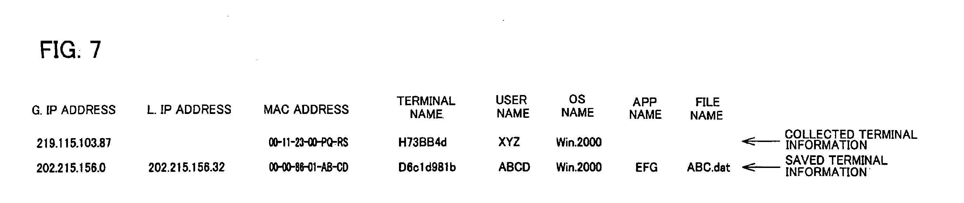

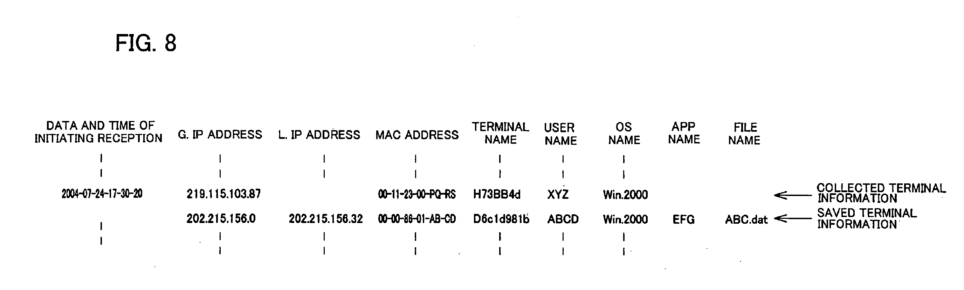

Fig. 5 is a schematic diagram showing a recording mode of the terminal 10 employed in the computer system in Fig. 1. Fig. 6 is a schematic diagram showing a state in which a data recording medium in - which data is recorded by the terminal 10 employed in the computer system in Fig. 1 is mounted in a terminal 10 in a different location. Fig. 7 is a schematic diagram showing terminal information collected and saved by the transmission program 11 of a data recording medium. Fig. 8 is a schematic diagram showing data recorded in the monitoring server 20.

The terminal 10 in the present embodiment has three recording modes adapted to automatically record the transmission program 11 itself besides data (secret data) in the terminal 10 on recording (copying) the data in a data recording medium in addition to the function of transmitting terminal information to the monitoring server 20 by means of the transmission program 11 described above.

An operation for recording (copying) secret data in the terminal 10 into a Compact Disc Rewritable (hereinafter referred to as a CD) 12, which is a data recording medium, in each of the first to third recording modes will be described in detail below.

Although writing of data in a CD-R (Compact Disc Rewritable) or a rewritable DVD (Digital Versatile Disc) requires the use of particular software called writing software, hereinafter a term of "copying" or "recording" is simply used. Further, on execution of an executable file recorded in the CD-R, a decrypted or decompressed file is recorded (saved) in another recording medium such as a hard disk drive.

As shown in Fig. 5, a blank CD 12 is set in the terminal 10 set in the first recording mode to copy data "ABC. dat", whereupon the data "ABC. dat" is recorded directly in the CD 12 and the transmission program 11 is recorded in the CD 12 in a state invisible during a normal operation of the OS as well. Concurrently, the terminal 10 collects terminal information at the time. Then, the collected terminal information and the transmission program 11 are recorded together in the CD 12.

The transmission program 11 recorded in the CD 12, as shown in the saved terminal information in Fig. 7, collects its own device data including a name of an application that has created the secret data "ABC. dat" and a secret data file name "ABC. dat" in addition to a global IP address, a private IP address, a MAC address, a name of the terminal, a user name, and an OS name.

Specifically, when the secret data is copied in the data recording medium by the first recording mode, the CD 12 appears as if only the secret data "ABC. dat" were recorded therein, and the transmission program 11 is invisible.

The transmission program 11 is an executable file set to be automatically activated, so as to be automatically activated upon mounting of the CD 12 in the terminal 10.

Next, as shown in Fig. 5, a CD 12 is set in the terminal 10 set in the second recording mode to copy secret data "ABC. dat", whereupon the secret data "ABC. dat" is encrypted in the first step and a decryption executable file "GHI. exe" adapted to decrypt the encrypted data is produced. Then, the transmission program 11 is embedded in the decryption executable file "GHI. exe." Concurrently, the terminal 10 collects terminal information (eight kinds of its own device data shown in Fig. 7) at the time, so as to embed the collected terminal information and the transmission program 11 together in the decryption executable file.

Specifically, when the secret data is copied in the second recording mode, only the decryption executable file "GHI. exe" is produced in the CD 12, with the transmission program 11 being invisible.

Execution of the decryption executable file "GHI. exe" decrypts the data, thereby allowing the secret data "ABC. dat" readable, therewithal activating the transmission program 11.

Next, as shown in Fig. 5, a CD 12 is set in the terminal 10 set in the third recording mode to copy secret data "ABC. dat", whereupon the secret data "ABC. dat" is encrypted in the first and second steps and a decryption executable file "JKL. exe" adapted to decrypt the encrypted data in the second step to be recovered to a decrypted state in the immediately previous step (in the first step) is produced and recorded in the CD 12. Then, the transmission program 11 is embedded in the decryption executable file "JKL. exe." Concurrently, the terminal 10 collects terminal information (eight kinds of its own device data shown in Fig. 7) at the time, so as to embed the collected terminal information and the transmission program 11 together in the decryption executable file "JKL. exe."

Specifically, when secret data is copied in the third recording mode, only the decryption executable file "JKL. exe" is produced in the CD 12, with the transmission program 11 being invisible.

Execution of the decryption executable file "JKL. exe" decrypts the data to be recovered to the first step, but content of the secret data "ABC. dat" has been still encrypted, so as to be invisible to a third party. Further, at this time, the transmission program 11 is activated to transmit the terminal information to the monitoring server 20.

When the first to third recording modes of the terminal 10 are released, the transmission program 11 is not contained in the terminal 10 and ordinary copy to record only secret data is performed in a CD 12.

Herein, in the computer system 1 in Fig. 6, if and when a third party copies without permission secret data in a CD 12 by any terminal 10 set in the first recording mode, as shown in Fig. 5, the secret data "ABC. dat" is recorded in the CD 12, and the transmission program 11 set to be automatically executed and the previous terminal information are recorded in an invisible state as well.

Then, as shown in Fig. 6, the CD 12 in which the secret data has been recorded is brought out of the organization A and mounted in a terminal 60 in a different connecting location B, whereupon the transmission program 11 set to be automatically activated is activated.

Thereby, as shown in Fig. 7, the transmission program 11 collects information of the computer 60 of the moment and transmits the collected latest computer information and the previous terminal information to the monitoring server 20.

In this case, the terminal information of the moment collected by the transmission program 11 includes a global IP address (219.115.103.87) assigned to the connecting location B, a MAC address (00-11-23-00-PQ-RS) of the terminal 60, a name of the terminal (H73BB4d), a user name (XYZ), and an OS name (Win2000).

The monitoring server 20, as shown in Fig. 8, records the terminal information transmitted from the computer 60 and a date and time of initiating reception (2004-07-24-17-30-20) as being related to each other.

Generally, even if secret data in the terminal 10 in Fig. 6 is copied without permission and brought out of the organization A, it is often the case that no one in the organization A notices the fact.

However, an administrator of the monitoring server 20 in the organization A recognizes that either the terminal 10 or the secret data is brought out by finding that the global IP address of the collected terminal information is different from that of the saved terminal information in referring to the logs shown in Fig. 8.

Further, in the example in Fig. 8, it is determined that it is not the terminal 10 but the data recording medium (CD 12) in which the secret data is recorded that is brought out because the MAC address, the name of the terminal, and the user name of the terminal information are also different from those of the previous terminal information. In the contrary, if and when the terminal information such as the MAC address, the name of the terminal, and the user name corresponds with that of the previous terminal information, it is determined that it is the terminal 10 that is brought out.

Still further, in referring to the name of the terminal, the user name, the name of the application, and the file name of the terminal information, it is possible to know what kind of data is brought out from which terminal 10.

Consequently, as well as in the above-mentioned case in which the terminal 10 is brought out without permission, a theft report is filed to the police herewith accompanied by the logs in the monitoring server 20, thereby making it possible for the police authority to readily identify the connecting location B by referring to the logs of the provider 50 managing the connecting location B.

In this way, according to the terminal 10 set in the first recording mode, even if secret data is copied without permission, the transmission program 11 recorded in the data recording medium (CD 12) identifies the location where the brought-out data is referred via the Internet 6 with certainty.

Consequently, setting of the terminal 10 in the first recording mode in such a case that a user leaves seat for a long period of time or returns home enables to promptly address to stealage (leakage) of data.

Now, in the computer system 1 in Fig. 1, an operation in such a case that a CD 12 (data recording medium) in which secret data copied by the terminal 10 set in the second recording mode is brought out without permission will be described in detail below.

Referring to Fig. 5, the CD 12 in which the data is copied by the second recording mode appears to have only the decryption executable file "GHI. exe," and the embedded transmission program 11 and its own device data are invisible.

Consequently, if and when a person who has brought out the CD 12 sets the CD 12 in a computer 60 in a connecting location B to refer its content, as shown in Fig. 5, it appears as if only the decryption executable file "GHI. exe" might exist.

Thus, when the person who has brought out data executes the decryption executable file "GHI. exe," the data is decrypted and the secret data "ABC. dat" is made readable. However, at the same time, the transmission program 11 is activated, thereby collecting information of the computer 60, as shown in Fig. 7. The transmission program 11 transmits the collected latest computer information and the previous terminal information to the monitoring server 20.

Thereby, an administrator of the monitoring server 20 identifies the connecting location B in a similar procedure as described above, in referring to the logs (Fig. 8).

Especially, it appears as if only the decryption executable file "GHI. exe" might exist in referring to the content in the CD 12 in which recording is performed by the second recording mode, and whereby there is a high probability to induce the person who has brought out the data to execute the decryption executable file "GHI. exe," with the consequence that the embedded transmission program 11 is activated. That simplifies program processing of the second recording mode.

As to a data recording medium (CD 12) recorded in the second recording mode, it is possible to identify the location where the data is referred, but the original data may be read out by the person who has brought out the data. Consequently, it is preferable to be used for countermeasure to copies of relatively inconsequential secret data.

Now, in the computer system 1 in Fig. 1, an operation in such a case that secret data in the terminal 10 set in the third recording mode is recorded in a data recording medium (CD 12) and brought out without permission will be described in detail below.

Referring to Fig. 5, the CD 12 in which data is copied by the third recording mode appears to have only the decryption executable file "JKL. exe", and the embedded transmission program 11 is invisible.

Consequently, as shown in Fig. 6, if and when a person who has recorded the secret data in the CD 12 and brought out it sets the CD 12 in a computer 60 in a connecting location B to refer its content, it appears as if only the decryption executable file "GHI. exe" might exist in the CD 12.

Thus, the person referring to the content has no means to access to the secret data other than execution of the decryption executable file "JKL. exe." When the person executes the decryption executable file "JKL. exe," the secret data is decrypted to be in a state encrypted in the first step. However, the decrypted secret data is not the actual secret data "ABC. dat" as being still encrypted in the first step. Consequently, the person trying to refer the content cannot read out the secret data "ABC. dat" at this stage.

Further, execution of the decryption executable file "JKL. exe" activates the transmission program 11, which collects information of the computer 60 of the moment, as shown in Fig. 7. The transmission program 11 transmits the collected latest computer information and the previous terminal information to the monitoring server 20.

Thereby, the connecting location B is identified in a similar procedure as described above, in referring to the logs (Fig. 8) of the monitoring server 20.

Especially, there is no danger of secret data recorded in the CD 12 by the third recording mode being read out even though the decryption executable file "JKL. exe" is executed. Even if a list of files in the CD 12 is displayed, only the decryption executable file "JKL. exe" appears to exist therein. That highly possibly induces the referring person to execute the executable file, and whereby the embedded transmission program 11 is activated. That simplifies program processing of the third recording mode.

In this way, even if secret data in the terminal 10 set in the third recording mode is recorded in a data recording medium (CD 12) to be brought out, the secret data is protected from being read out. The third recording mode is preferable to prevent copies of important secret data. Further, setting in the third recording mode identifies the location where the third party intends to read out the secret data.

The embodiment of the present invention is described above and the CD 12 is illustrated as an example of a data recording medium in the above-mentioned description, but the use of a medium such as a DVD (Digital Versatile Disc), an MO (Magneto Optical disk), and an FD (Flexible Disk) also brings about a similar effect.

Further, such a configuration as providing the independent monitoring server 20 is employed in Figs. 1, 4, and 6, but it is also possible to employ such a configuration as giving a function of a monitoring server to the business-oriented server 30 so as to achieve cost saving.

Still further, in the above-mentioned embodiment, encryption is performed on recording secret data in the terminal 10 into a data recording medium (CD 12), but data compression can be also performed. In this case, a self-extracting file is executed, thereby extracting and executing the transmission program 11 besides the secret data.

## Claims

1. A computer system having a terminal information reporting function,
being formed by connecting at least one terminal and a monitoring server to the Internet,
being adapted to transmit terminal information showing hardware requirements of the terminal from the individual terminal to the monitoring server,
wherein the terminal contains a transmission program adapted to collect terminal information including a global IP address assigned to the terminal, so as to automatically transmit the terminal information to the monitoring server,
the transmission program being contained to be activatable in a state invisible during a normal operation of an operating system, and
wherein the monitoring server is adapted to sequentially record the terminal information transmitted from the terminal with no addition or with at least a date and time of initiating reception of the terminal information added to the terminal information.

2. A computer system having a terminal information reporting function,
being formed by a LAN connected to the Internet and incorporating at least one terminal and a monitoring server,
being adapted to transmit terminal information showing hardware requirements of the terminal from the individual terminal to the monitoring server,
wherein the terminal contains a transmission program adapted to collect terminal information including a global IP address and a private IP address assigned to the terminal, so as to automatically transmit the terminal information to the monitoring server,
the transmission program being contained to be activatable in a state invisible during a normal operation of an operating system, and
wherein the monitoring server is adapted to sequentially record the terminal information transmitted from the terminal with no addition or with at least a date and time of initiating reception of the terminal information added to the terminal information.

3. The system as defined in claim 1 or 2,
wherein the transmission program is activated upon at least one selected from a power-on operation of the terminal and an Internet connection of the terminal.

4. The system as defined in one of claims 1 to 3,
wherein the terminal has a recording mode adapted to automatically record the transmission program besides data in the terminal on recording the data in a data recording medium.

5. The system as defined in claim 4,
wherein the terminal is adapted to record the transmission program in the data recording medium so as to be automatically activatable in a state invisible during a normal operation of the operating system.

6. The system as defined in one of claims 1 to 5,
wherein the terminal has a recording mode adapted to convert data in the terminal to a recoverable executable file, to embed the transmission program within the converted executable file, and to record the file in the recording medium, so as to record the data in the data recording medium,
so that the data is recovered and the transmission program is activated upon execution of the executable file recorded in the data recording medium by the recording mode.

7. The system as defined in claim 6,
wherein the terminal has another recording mode adapted to execute, on converting the data to the executable file, processing of encryption or compression in at least one step selected from the first step and the second step besides the first step,
so that the data is recovered to a state selected from a decrypted state and a decompressed state in the immediately previous step upon execution of the executable file produced by the recording mode.

8. The system as defined in one of claims 1 to 7,
wherein the terminal is adapted to save at least one collection of the collected terminal information, and
wherein the terminal is adapted to transmit to the monitoring server, on activation of the transmission program, the latest terminal information newly collected and the previous terminal information collected and saved before.

9. The system as defined in claim 8,
wherein the terminal is adapted to record, on recording data in the terminal into a data recording medium, the latest terminal information collected on recording and the transmission program in the data recording medium.

10. The system as defined in one of claims 1 to 9,
the terminal information including at least one selected from a group of a private IP address assigned to the terminal, a MAC address unique to the terminal, a name of the terminal, a user name of the terminal, a name of an operating system installed in the terminal, a name of a used application and a file name in addition to the global IP address.

11. The system as defined in one of claims 1 to 10, further comprising a business-oriented server connected to the Internet instead of the monitoring server, so that the business-oriented server is equipped with a function of the monitoring server.

12. A computer having its own device information reporting function being connectable to the Internet, containing a transmission program adapted to collect its own device information including a global IP address assigned to the computer to automatically transmit the information to a destination possessing a predetermined IP address,
wherein the transmission program is contained to be activatable in a state invisible during a normal operation of an operating system.

13. The computer as defined in claim 12,
being adapted to activate the transmission program upon at least one selected from a power-on operation of the computer and an Internet connection of the computer.

14. The computer as defined in claim 12 or 13, further containing a recording mode adapted to automatically record the transmission program besides data in the own device on recording the data in a data recording medium.

15. The computer as defined in claim 14,
being adapted to record the transmission program in the data recording medium so as to be automatically activatable in a state invisible during a normal operation of the operating system.

16. The computer as defined in one of claims 12 to 15,
having a recording mode adapted to convert data in its own device to a recoverable executable file, to embed the transmission program within the converted executable file; and to record the file in the recording medium, so as to record the data in the data recording medium,
so that the data is recovered with the transmission program being activated upon execution of the executable file recorded in the data recording medium by the recording mode.

17. The computer as defined in claim 16,
having another recording mode adapted to execute, on converting the data to the executable file, processing of encryption or compression in at least one step selected from the first step and the second step besides the first step,
so that the data is recovered to a state selected from a decrypted state and a decompressed state in the immediately previous step upon execution of the executable file produced by the recording mode.

18. The computer as defined in one of claims 12 to 17,
being adapted to save at least one collection of the collected terminal information, and
being adapted to transmit to the destination, on activation of the transmission program, the latest terminal information newly collected and the previous terminal information collected and saved before.

19. The computer as defined in claim 18,
being adapted to record, on recording data in its own device into a data recording medium, the latest terminal information collected on recording and the transmission program in the data recording medium.

20. The computer as defined in one of claims 12 to 19,
its own device information including at least one selected from a group of a private IP address assigned to the computer, a MAC address unique to the computer, a name of the computer, a user name of the computer, a name of an operating system installed in the computer, a name of a used application and a file name in addition to the global IP address.
